Europäisches Patentamt

European Patent Office

Office européen des brevets

(11) Publication number: **0 147 390**
**B1**

## (12) EUROPEAN PATENT SPECIFICATION

(45) Date of publication of patent specification: **04.07.90**

(51) Int. Cl.⁵: **C 04 B 9/04**

(21) Application number: **83902332.2**

(22) Date of filing: **02.06.83**

(86) International application number:
**PCT/US83/00850**

(87) International publication number:
**WO 84/04744 06.12.84 Gazette 84/28**

(54) BONDED AGGREGATE STRUCTURES AND PRODUCTION THEREOF.

(43) Date of publication of application:
**10.07.85 Bulletin 85/28**

(45) Publication of the grant of the patent:
**04.07.90 Bulletin 90/27**

(84) Designated Contracting States:
**AT BE CH DE FR GB LI LU NL SE**

(56) References cited:
**EP-A- 32 532**
**US-A-3 202 520**
**US-A-3 923 534**

**No relevant documents have been disclosed**

(73) Proprietor: **QUADCO COMPONENT SYSTEMS, INC.**
**29200 Vassar Road Suite 690**
**Livonia MI 48152 (US)**

(72) Inventor: **SHUBOW, Calvin**
**20995 Hunter's Drive**
**Farmington, MI 48024 (US)**
Inventor: **SKINNER, Robert, V.**
**1N 281 Prarie**
**Glen Ellyn, IL 60137 (US)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

**Description**

Technical field

This invention relates generally to bonded aggregate structures and their production and to improved building (wall, floor and ceiling) panel structures and the like laminated with bonded aggregate and methods for their production.

Background art

Bonded aggregate structures are well known for refractory purposes (US—A—3,285,758) and for outdoor load-bearing and road repair use (US—A—4,059,455). The mixtures used for forming the known structures require a high content of ammonium phosphate components. Such use is impractical and even hazardous for many purposes, particularly indoors or at building sites where good ventilation is unavailable to remove the high concentration of gaseous ammonia generated by the bonding reaction.

It is therefore an object of the present invention to provide bonded aggregate structures and means for their production which avoid the disadvantages of the prior art structures and processes.

It is also an object of the invention to provide bonded aggregate structures in any of a variety of densities, compressivities, shapes, reflectivities, insulative and energy transfer qualities, fire resistant properties and the like.

It is another object of the invention to provide economical means for improving the energy efficiency of panel strcutures and the like as, for example, in furnaces, stoves, heaters, radiant heat panels, wall, floor and ceiling surfaces, building and room dividers, warehouse and storage spaces, heating and processing zones and the like.

It is still another object to provide means for the fast repair, retrofitting and/or construction of insulative or load-bearing surfaces, structures and the like, advantageously at ambient temperature.

These and other objects, features and advantages will be seen from the following detailed description of the invention.

Disclosure of the invention

The invention in one aspect is in bonded aggregate structures obtained at ambient temperature by establishing a workable aggregate mixture which undergoes an exothermic reaction, working the mixture into a predetermined form prior to setting, and allowing the worked form to set into a rigid structure. The workable mixtures of the invention are constituted with magnesium oxide, aluminum oxide, aggregate and aqueous mono aluminum phosphate acidic solution; optionally with compatible structural fibers such as glass fibers and filaments. While the quality and proportions of the components are not particularly critical, the weight ratio of aluminum oxide to acidic solution (expressed as 50% solution with a weight ratio $P_2O_5$: $Al_2O_3$ of about 4) suitably is from about 1:1 to about 1:3, the weight ratio of magnesium oxide to aluminum oxide is from about 1:1 to about 1:6, and the quantity of acidic solution relative to the total mixture is sufficient prior to setting to impart lubricity (that is, smoothness and uniformity) to the mixture. The setting time of the mixture can be varied as desired. By increasing the relative proportion of aluminum oxide, the setting time is increased.

The magnesium oxide used is a dry dead-burned particulate magnesia. A typical chemical analysis and mesh size for magnesia may be the following:

| Oxide | | Standard mesh size | | |
|---|---|---|---|---|
| $SiO_2$ | 4.6% | +0.321 mm | (+48) | 0.2% |
| $Fe_2O_3$ | 2.7 | +0.149 mm | (+100) | 6.5 |
| $Al_2O_3$ | 1.2 | +0.074 mm | (+200) | 21.6 |
| CaO | 4.2 | +0.044 mm | (+325) | 17.7 |
| MgO | 87.3 | +0.044 mm | (−325) | 54.0 |

(Bulk density, g./cc., 3.16)

The aluminum oxide is a dry alumina powder or calcined alumina for which a typical analysis may be the following:

| Oxide | |
| --- | --- |
| $SiO_2$ | 0.03% |
| $Fe_2O_3$ | 0.03 |
| $Na_2O$ | 1.13 |
| $Al_2O_3$ | 99.8 |

The aggregate is any suitable siliceous aggregate or mixture of such aggregates having an average density ranging from light to heavy depending on the intended use. The size range of the aggregate is not critical and suitably may be from under 1.56 mm to 12.5 mm (1/16 inch to over 1/2 inch). Examples of aggregate materials are cellular and non-cellular materials such as sand, stone, refractory aggregates, silica aggregates and rare earth materials, pea gravel, expanded perlite and vermiculite, volcanic glass, volcanic ash, pumice, glass beads, silica aggregates and the like. In applications where high mass is a problem, the use of cellular, low density aggregate is preferred, the density for strength and low weight advantage preferably being in the range from about 80 kg/cu.m to about 240 kg/cu.m (about 5 to about 15 pounds per cubic foot). Glass beads, perlite and vermiculite are preferred cellular low density aggregates. For high density bonded aggregate structures, an aggregate such as stone, refractory aggregate, sand or gravel is preferred. The aqueous mono aluminum phosphate acidic solution can be varied in concentration and amount used such that it is equivalent for purposes of imparting lubricity and reacting, to an aluminum phosphate, 50% solution, technical grade, having the following typical properties:

Formula: $Al (H_2PO_4)_3 \cdot XH_2O$ (in aqueous solution)
Molecular Weight: 318 for $AL (H_2PO_4)_3$
Description: A clear, water-white solution
Typical Analysis:
$P_2O_5$: 33.5%
$Al_2O_3$: 8.0%
$P_2O_5/Al_2O_3$: 4.19
$Al_2O_3/P_2O_5$: 0.24
$ALPO_4$: 19.0%
$H_3PO_4$: 30.9%
Free $H_2O$: 40%
Water of Hydration: 10%
Physical Properties:
pH (1% solution): 2.5
Specific Gravity: 1.47 @ 25/15.5°C
Baume: 46 @ 25°C
Viscosity: 35—90 centipoise
Loss at 110°C: 48—50%
Miscibility w/water Total

An advantage of the instant mixtures is that they can be established under cold weather conditions. No external heat is required. The reaction which takes place upon mixing the components is exothermic. The setting time varies depending on the relative quantities of the components. For example, the setting time of the mixture is about 4 to 6 minutes when the weight ratio $MgO:Al_2O_3$ is 1:1 and can be extended correspondingly at this ratio is decreased. Prior to mixing, the dry and wet components are kept separately. For purposes of mixing, the components are then brought together in any suitable way to provide a uniform workable mixture. Conveniently for this purpose, the dry components magnesium oxide, aluminum oxide and aggregate can be formulated in a single package or lot separate from the acidic solution. The latter, contained in an appropriate quantity as a single unit package or lot, can then be combined with the dry components at the site of mixing and forming. The resulting mixture, while still workable is then placed, shaped, compacted, etc., by conventional means, into a suitable form or cast and allowed to set until rigid, for purposes of repair, retrofitting or construction. The form used can be a cavity or break in a road surface or bridge, a specially made construction form, a building template or modular form, an open space within a wall or floor or ceiling, the wall surfaces of a chimney or furnace, a panel adapted to receive a covering laminate or layer of settable material, or other similar form. An important advantage of the instant bonded aggregate structures is that they are non-ammoniacal so that during mixing, forming and setting no special precautions need be taken to vent the area of ammonia fumes.

Other advantages in this regard are that the formulations are temperature insensitive, can be made to have high early strength, and given the benefit of the present teaching, can be adjusted within wide limits to suit the particular requirements of each job. Thus, the formulation can be varied for setting to a fast or slow rock-hard set by varying the ratio of alumina to magnesium oxide; for low density (less than about 240 kg/cu.m (15 pounds per cubic foot) or high density (more than about 240 kg/c.m (15 pounds per cubic foot), and for various degrees of wetness, looseness, plasticity, stickiness, adhesion, etc., as desired, without special knowledge, by those skilled in the art. For example, by a procedure described below in greater detail, a good high density, load bearing ceramic material having early high strength can be made with the following components:

|  | Parts by weight |
|---|---|
| Magnesium oxide | 1.5 |
| Aluminum oxide | 1.5 |
| Sand | 3 |
| Mono aluminum phosphate, 50% acidic solution | 3 |

One preferred aspect of the invention is a method of improving the energy efficiency of a room panel or zone-confining panel having a facing surface and an energy-transmissive backing surface. The terms room panel and zone-confining panel as used herein are meant to include wall or floor or ceiling members of buildings; work-station panels, dividers, carrels, stalls, booths, etc.; radiant heat panels, fire walls and false ceilings, panel and wall members of stationary objects such as hoods, stoves, furnaces, vats, boilers, animal shelters, brooders, silos, storage tanks, processing chambers; and the like. The method of improving the energy efficiency of such panels includes the steps of laminating the backing surface, and allowing the thus laminated mixture or cover to set until hard and thereby become rigidly attached to the backing surface. Energy efficiency is realized in that panels laminated according to the invention become heat-insulative, especially panels that are laminated with mixtures containing cellular aggregates such as glass beads, expanded perlite, etc. In the latter case, the K-factor of the resulting bonded aggregate cover is comparable to that of the cellular aggregates per se. When the cover includes a mix of cellular and non-cellular aggregate, certain advantages are seen such as enhanced heat content or capacity whereby the cover has a so-called flywheel effect with respect to retention of heat or energy level over prolonged periods, which serves to avoid precipitous changes in temperature within the confines of the covered panel or panel enclosure. Advantageously, the cover also serves as an acoustical insulator. It will be realized that the cover for the panel can be varied in its coverage of the panel and its thickness. Thus, the cover will ordinarily be completely co-extensive with the panel. The cover can be uniform or non-uniform in thickness, as desired. To assist in strengthening the attachment of the laminate to the cover, anchoring means which may be conventional can be used such as lathing strips, fingers, tie rods, perforations, and the like, spaced at intervals on the panel. A preferred panel embodiment of the invention is an overhead or ceiling panel member and preferably a radiant heat panel, laminated according to the method of the invention. A preferred method embodiment comprises the step of anchoring the laminated mixture to the radiant heat panel by pre-formed mold defining relief surface means in the panel, presently to be described.

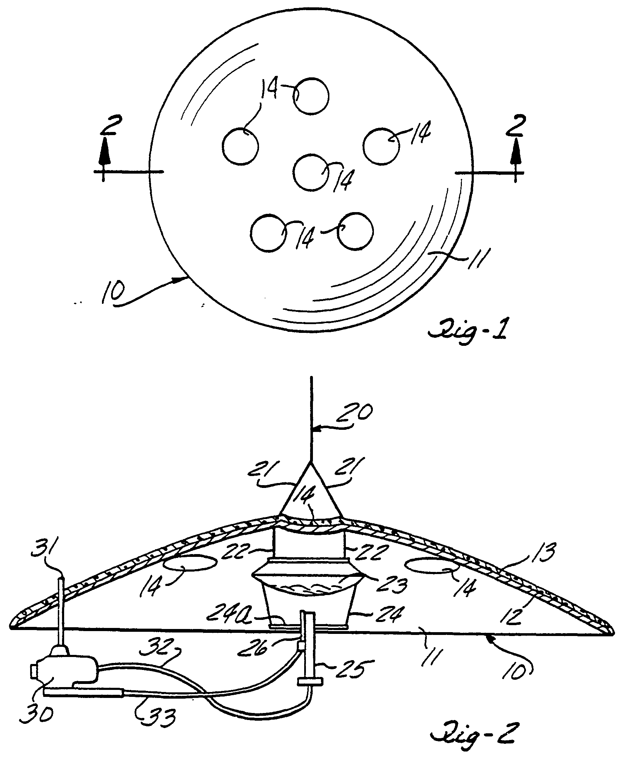

Referring to the accompanying drawing of a preferred radiant heat panel or space heater panel, according to the invention, Figure 1 is a view showing the facing surface; and

Figure 2 is a cross-sectional view of the panel taken on line 2—2 of Figure 1 showing the panel and its cover of laminated bonded aggregate structure.

As seen in Figures 1 and 2, the radiant heat panel 10 has an exposed surface 11 and a congruent backing surface 12 to the latter of which a bonded aggregate 13 is attached. The attachment is favored and prevented from lateral dislodgement by mold forming relief means or sunk relief anchor means 14. A support system 20, suspended from overhead as from the ceiling (not shown) of a building or room by a cable or chain 21 attached to the panel is used to maintain the panel 10 steady at a predetermined position above the floor for purposes of heating the space within the room. Further capable segments 22 support a reflector 23 which in turn by attachment to cable segments 24 and mounting base 24a support a gas burner 25 and pilot 26. The latter burner and pilot unit is serviced by a temperature controller 30, gas supply line 31, and burner and pilot lines 32 and 33. In a preferred embodiment, the panel 10 is 24 gauge steel, 1.22 m (4 feet) in diameter with 0.305 m (1 ft.) center-to-center radial spacing of the circumferential anchor means 14. The bonded aggregate cover 13 is about 25.4—50.8 mm (1—2 inches) thick. The heating unit uses a burner rated at $1.584 \times 10^7$ joules (15,000 BTU). Air temperature control is adjustable from 25°—43°C (78 to 110°F).

In a preferred procedure, the backing surface 12 of the panel is laminated to a depth of about 25.4—50.8 mm (1 to 2 inches) using a uniform mixture of the following components:

|  | Percent by weight |
| --- | --- |
| Magnesium oxide (BRI dry burned Magnesite DB87, available from Basic Refractories Cleveland, Ohio) | 10 |
| Aluminum oxide, calcined (C-70 to C-75 FB, available from Alcan Aluminum Corporation) | 30 |
| Glass beads, cellular, (size distribution, 25.4/16 to 25.4/2 mm (1/16″ to 1/2″), available from Norton Chemical Co.) | 30 |
| Mono Aluminum Phosphate, 50% aqueous solution, (available from Stauffer Chemical Co., Westport, Conn.) | 30 |

The dry ingredients are first mixed, and the solution is then added with thorough mixing at ambient temperature to provide a smooth mixture. The resulting mixture is applied in a layer by troweling or other suitable means to the top of the radiant heat panel and allowed to set. The mixture sets to rock-like hardness in about 6 to 8 minutes. The laminated panel can be used immediately for radiating heat. Surprisingly, the savings in energy usage typically is 20 to 50% or more. The increased efficiency is seen by the fact that heat losses are minimized such that to maintain a given temperature, the burner unit is activated substantially less frequently than with prior art uncoated heater panels.

The lamination according to the invention can be advantageously done using a conventional panel 10 which lacks the relief shaped anchor means 14. Optionally, the facing surface 11 of the cover 13 can be coated with a suitable light or heat reflective paint or similar coating. The radiant heat panels of the invention are preferred for animal shelters, especially for brooder radiant heat panels used, for example, in raising chicks.

The embodiments of the invention in which an exclusive property or privilege is claimed are defined as follows.

**Claims**

1. A bonded aggregate structure derived from magnesium oxide aluminum oxide, mono aluminum phosphate and water characterised in that it is obtained by establishing a non-ammoniacal workable mixture of magnesium oxide, aluminum oxide, aggregate, and aqueous mono aluminum phosphate acidic solution, the weight ratio of aluminum oxide to acidic solution (expressed as 50% solution with $P_2O_5$: $Al_2O_3$ of about 4) being from about 1:1 to about 1:3, the weight ratio of magnesium oxide to aluminum oxide being from about 1:1 to about 1:6, and the quantity of acidic solution relative to the total mixture being sufficient prior to setting to impart lubricity to the mixture; working the mixture into a predetermined form, and allowing the thus worked form to set into a rigid structure.

2. A structure according to Claim 1 characterised in that the aggregate is cellular and has a low density in the range from about 80 to about 240 kg/m³ (5 to about 15 pounds per cubic foot).

3. A structure according to Claim 2 characterised in that the aggregate comprises glass beads.

4. A structure according to Claim 2 characterised in that the aggregate comprises perlite.

5. A structure according to Claim 2 characterised in that the aggregate comprises vermiculite.

6. A structure according to Claim 1 characterised in that the aggregate comprises a stone or refractory aggregate.

7. A structure according to Claim 2 characterised in that said structure is made from a mixture containing by approximate weight 10% magnesium oxide, 30% aluminum oxide, 30% aggregate and 30% acidic solution.

8. A structure according to Claim 7 characterised in that the aggregate comprises glass beads.

9. A process for producing a bonded aggregate structure derived from magnesium oxide, aluminum oxide, mono aluminum phosphate and water characterised in that said process comprises the steps of establishing a workable non-ammoniacal mixture of magnesium oxide, aluminum oxide, aggregate and aqueous mono-aluminum phosphate acidic solution, the weight ratio of aluminum oxide to acidic solution (expressed as 50% solution with $P_2O_5$: $Al_2O_5$ of about 4) being from about 1:1 to about 1:3, the weight ratio of magnesium oxide to aluminum oxide being from about 1:1 to about 1:6, and the quantity of acidic solution relative to the total mixture being sufficient prior to setting to impart lubricity to the mixture; working the mixture into a predetermined form; and allowing the thus worked form to set into a rigid structure.

10. A process according to Claim 9 characterised in that the aggregate is cellular and has a low density in the range from about 80 to about 240 kg/m³ (5 to about 15 pounds per cubic foot).

11. A process according to Claim 10 characterised in that the aggregate comprises glass beads.

12. A process according to Claim 10 characterised in that the aggregate comprises perlite.

13. A process according to Claim 10 characterised in that the aggregate comprises vermiculite.

14. A process according to Claim 10 characterised in that the aggregate comprises a stone or refractory aggregate.

15. A process according to Claim 10 characterised in that a mixture contains by approximate weight, 10% magnesium oxide, 30% aluminum oxide, 30% aggregate and 30% acidic solution.

16. A process according to Claim 15 characterised in that the aggregate comprises glass beads.

17. A process according to any one of Claims 9—16 characterised in that the workable mixture is laminated onto a backing surface of a room panel or zone-confining panel having a facing surface and said backing surface, which backing surface is energy-transmissive, to provide a generally co-extensive energy conserving cover for the backing surface, and allowing the thus laminated mixture to set until hard and thereby become rigidly attached to the backing surface to improve the energy efficiency of said panel.

18. A process according to Claim 17 characterised in that the panel is a floor or wall member.

19. A process according to Claim 17 characterised in that the panel is an overhead or ceiling member.

20. A process according to Claim 19 characterised in that the panel is a radiant heat panel.

21. A process according to Claim 20 characterised in that the panel is a brooder radiant heat panel.

22. A process according to any one of Claim 17—21 characterised by comprising the step of anchoring the mixture to the panel by pre-formed mold defining relief surface means in the panel.

23. A process according to Claim 22 characterised by comprising the step of removing the relief surface means subsequent to the setting of the laminated mixture such that portions of the underside of the laminated mixture are exposed.

**Patentansprüche**

1. Gebundene Aggregatstruktur aus Magnesiumoxid, Aluminiumoxid, Monoaluminiumphosphat und Wasser, dadurch gekennzeichnet, daß sie aus einer nichtammoniakalischen, formbaren Mischung aus Magnesiumoxid, Aluminiumoxid, Aggregat und einer sauren Lösung aus wässrigem Monoaluminiumphosphat erhalten worden ist, wobei das Gewichtsverhältnis von Aluminiumoxid zur sauren Lösung (ausgedrückt als 50% Lösung mit einem $P_2O_5/Al_2O_3$-Verhältnis von ca. 4) ca. 1:1 bis 1:3 und das Gewichtsverhältnis von Magensiumoxid zu Aluminiumoxid ca. 1:1 bis 1:6 betragen und der Anteil der sauren Lösung in Bezug auf die gesamte Mischung genügend lange vor dem Abbinden zugegeben wird, damit die Mischung eine gewisse Geschmeidigkeit erhält und daß die Mischung in eine vorbestimmte Form überführt wird und man die so bearbeitete Form sich verfestigen läßt.

2. Struktur nach Anspruch 1, dadurch gekennzeichnet, daß das Aggregat zellig ist mit niedriger Dichte im Bereich von 80 bis ca. 240 kg/m³ (5 bis etwa 15 pounds per cubic foot).

3. Struktur nach Anspruch 2, dadurch gekennzeichnet, daß das Aggregat Glasperlen aufweist.

4. Struktur nach Anspruch 2, dadurch gekennzeichnet, daß das Aggregat Perlit aufweist.

5. Struktur nach Anspruch 2, dadurch gekennzeichnet, daß das Aggregat Vermiculit aufweist.

6. Struktur nach Anspruch 1, dadurch gekennzeichnet, daß das Aggregat Stein oder ein feuerfestes Aggregat ist.

7. Struktur nach Anspruch 2, dadurch gekennzeichnet, daß diese Struktur aus einer Mischung gefertigt wurde, welche sich aus ca. 10 Gew.-% Magnesiumoxid, 30 Gew.-% Aluminiumoxid, 30 Gew.-% Aggregat und 30 Gew.-% saurer Lösung zusammensetzt.

8. Struktur nach Anspruch 7, dadurch gekennzeichnet, daß das Aggregat Glaskügelchen aufweist.

9. Verfahren zur Herstellung einer gebundenen Aggregatstruktur, erhalten aus Magnesiumoxid, Aluminiumoxid, Monoaluminiumphosphat und Wasser, dadurch gekennzeichnet, daß dieses Verfahren folgende Schritte aufweist:

man stellt eine formbare nicht-ammoniakalische Mischung aus Magnesiumoxid, Aluminiumoxid, Aggregat und eine saure Lösung aus wässrigem Monoaluminiumphosphat zur Verfügung, wobei das Gewichtsverhältnis von Aluminiumoxid zur sauren Lösung (ausgedrückt als 50% Lösung mit einem $P_2O_5/Al_2O_3$-Verhältnis von ca. 4) ca. 1:1 bis 1:3 und das Gewichtsverhältnis von Magnesiumoxid zu Aluminiumoxid ca. 1:1 bis 1:6 betragen und die Menge der sauren Lösung in Bezug auf die Gesamtmischung vor dem Abbinden derart ausreichend ist, damit die Mischung eine gewisse Gleitfähigkeit erlangt, überführt die Mischung in eine vorbestimmte Form und läßt die so ausgeführte Form sich verfestigen.

10. Verfahren nach Anspruch 9, dadurch gekennzeichnet, daß das Aggregat zellig ist mit niedriger Dichte im Bereich von etwa 80 bis ca. 240 kg/m³ (5 bis etwa 15 pounds per cubic foot).

11. Verfahren nach Anspruch 10, dadurch gekennzeichnet, daß das Aggregat Glasperlen aufweist.

12. Verfahren nach Anspruch 10, dadurch gekennzeichnet, daß das Aggregat Perlit aufweist.

13. Verfahren nach Anspruch 10, dadurch gekennzeichnet, daß das Aggregat Vermiculit aufweist.

14. Verfahren nach Anspruch 10, dadurch gekennzeichnet, daß das Granulat ein Stein oder ein feuerfestes Aggregat ist.

15. Verfahren nach Anspruch 10, dadurch gekennzeichnet, daß eine Mischung ca. 10 Gew.-% Magnesiumoxid, 30 Gew.-% Aluminiumoxid, 30 Gew.-% Aggregat und 30 Gew.-% saure Lösung enthält.

16. Verfahren nach Anspruch 15, dadurch gekennzeichnet, daß das Aggregat Glaskügelchen aufweist.

17. Verfahren nach jedem der Ansprüche 9—16, dadurch gekennzeichnet, daß die formbare Mischung auf die Rückseite einer Raumtäfelung oder eines Trennwand-Paneels laminiert wird, welche eine Vorderseite und diese Rückseite aufweisen, wobei diese Rückseite energiedurchlässig ist und somit einen alles umfassenden energiespeichernden Überzug für die Rückseite bildet und daß man die so laminierte Mischung erhärten und sich hierdurch starr an die Rückseite anheften läßt, um den Energiewirkungsgrad dieses Paneels zu verbessern.

18. Verfahren nach Anspruch 17, dadurch gekennzeichnet, daß das Paneel ein Fußboden- oder Wandteil darstellt.

19. Verfahren nach Anspruch 17, dadurch gekennzeichnet, daß das Paneel Teil einer Abhängung oder einer Decke ist.

20. Verfahren nach Anspruch 19, dadurch gekennzeichnet, daß das Paneel ein Strahlungswärmepaneel ist.

21. Verfahren nach Anspruch 20, dadurch gekennzeichnet, daß das Paneel ein Brutapparat-Strahlungswärmepaneel ist.

22. Verfahren nach jedem der Ansprüche 17—21, gekennzeichnet durch die Stufe, bei der die Mischung am Paneel mittels vorgeformter, das Muster bestimmender, auf der Oberfläche des Paneels befindlicher Haltevorrichtungen verankert wird.

23. Verfahren nach Anspruch 22, gekennzeichnet durch die Stufe, bei der die auf der Oberfläche befindlichen Haltevorrichtungen unmittelbar nach dem Härten der laminierten Mischung entfernt werden, so daß Teile der Unterseite der laminierten Mischung frei liegen.

**Revendications**

1. Structure à base d'agrégat-lié, dérivée d'oxyde de magnésium, d'oxyde d'aluminium, de phosphate monoaluminique et d'eau, caractérisée en ce qu'on l'obtient en établissant un mélange non ammonical pouvant être traité d'oxyde de magnésium, d'oxyde d'aluminium, d'agrégat et de solution acide aqueuse de phosphate monoaluminique, le rapport pondéral de l'oxyde d'aluminium à la solution acide (exprimé en tant que solution à 50% avec un rapport $P_2O_5 : Al_2O_3$ d'environ 4) étant d'environ 1:1 à 1:3, le rapport pondéral d'oxyde de magnésium à oxyde d'aluminium étant d'environ 1:1 à 1:6 et la quantité de solution acide par rapport au mélange total étant suffisante avant la prise pour conférer une onctuosité au mélange, en façonnant le mélange selon une forme prédéterminée et en laissant la forme ainsi élaborée prendre en une structure rigide.

2. Structure suivant la revendication 1, caractérisée en ce que l'agrégat est cellulaire et a une faible densité de l'ordre d'environ 80 à 240 kg/m³ (5 à 5 livres par pied cubique).

3. Structure suivant la revendication 2, caractérisée en ce que l'agrégat comprend des perles de verre.

4. Structure suivant la revendication 2, caractérisée en ce que l'agrégat comprend de la perlite.

5. Structure suivant la revendication 2, caractérisée en ce que l'agrégat comprend de la vermiculite.

6. Structure suivant la revendication 1, caractérisée en ce que l'agrégat comprend de la pierre ou un agrégat réfractaire.

7. Structure suivant la revendication 2, caractérisée en ce que cette structure est faite à partir d'un mélange contenant environ 10% en poids d'oxyde de magnésium, 30% en poids d'oxyde d'aluminium, 30% d'agrégat de 30% de solution acide.

8. Structure suivant la revendication 7, caractérisée en ce que l'agrégat comprend des perles de verre.

9. Procédé pour produire une structure à agrégat lié, dérivée d'oxyde de magnésium, d'oxyde d'aluminium, de phosphate monoaluminique et d'eau, caractérisée en ce qu'il comprend les étapes selon lesquelles on établit un mélange non ammonical pouvant être traité d'oxyde de magnésium, d'oxyde d'aluminium, d'agrégat et de solution acide aqueuse de phosphate monoaluminique, le rapport pondéral de l'oxyde d'aluminium à la solution acide (exprimé en tant que solution à 50% avec un rapport $P_2O_5 : Al_2O_3$ d'environ 4) étant d'environ 1:1 à 1:3, le rapport pondéral d'oxyde de magnésium à oxyde d'aluminium étant d'environ 1:1 à 1:6 et la quantité de solution acide par rapport au mélange total étant suffisante avant la prise pour conférer une onctuosité au mélange, on façonne le mélange en une forme prédéterminée et on laisse la forme ainsi élaborée prendre en une structure rigide.

10. Procédé suivant la revendication 9, caractérisé en ce que l'agrégat est cellulaire et a une faible densité de l'ordre d'environ 80 à 240 kg/m³ (5 à 15 livres par pied cubique).

11. Procédé suivant la revendication 10, caractérisé en ce que l'agrégat comprend des perles de verre.

12. Procédé suivant la revendication 10, caractérisé en ce que l'agrégat comprend de la perlite.

13. Procédé suivant la revendication 10, caractérisé en ce que l'agrégat comprend de la vermiculite.

14. Procédé suivant la revendication 10, caractérisé en ce que l'agrégat comprend de la pierre ou un agrégat réfractaire.

15. Procédé suivant la revendication 10, caractérisé en ce que le mélange contient environ 10% en poids d'oxyde de magnésium, 30% en poids d'oxyde d'aluminium, 30% d'agrégat et 30% de solution acide.

16. Procédé suivant la revendication 15, caractérisé en ce que l'agrégat comprend des perles de verre.

17. Procédé suivant l'une quelconque des revendications 9 à 16, caractérisé en ce que le mélange pouvant être traité est laminé sur une surface de support d'un panneau pour pièce ou d'un panneau délimitant une zone ayant une surface avant et cette surface de support, laquelle surface de support transmet l'énergie, pour fournir une couverture conservant l'énergie généralement de même surface sur la surface de support, et que le mélange ainsi laminé est laissé prendre jusqu'au moment où il est dur et ainsi solidement fixé à la surface de support pour améliorer le rendement énergétique de ce panneau.

18. Procédé suivant la revendication 17, caractérisé en ce que le panneau est un élément de plancher ou de paroi.

19. Procédé suivant la revendication 17, caractérisé en ce que la panneau est un élément supérieur ou de plafond.

20. Procédé suivant la revendication 19, caractérisé en ce que le panneau est un panneau à chaleur radiante.

21. Procédé suivant la revendication 20, caractérisé en ce que le panneau est un panneau à chaleur radiante pour couveuse.

22. Procédé suivant l'une quelconque des revendications 17 à 21, caractérisé en ce qu'il comprend l'étape d'ancrage du mélange au panneau par un moule pré-formé définissant des moyens de surface en relief dans le panneau.

23. Procédé suivant la revendication 22, caractérisé en ce qu'il comprend l'étape d'élimination des moyens de surface en relief après prise du mélange laminé de façon à exposer des portions du dessous du mélange laminé.

Fig-1

Fig-2

1